# EUROPÄISCHE PATENTSCHRIFT

(11) **EP 0 489 741 B1**
(45) Veröffentlichungstag und Bekanntmachung des Hinweises auf die Patenterteilung: **29.09.1993**
(21) Anmeldenummer: 90910690.8
(22) Anmeldetag: 07.07.1990
(51) Int. Cl.: B64F 1/22

(54) **VERFAHREN UND VORRICHTUNG ZUM SCHLEPPEN EINES FLUGZEUGS MIT ANGEHOBENEM BUGRAD**
PROCESS AND DEVICE FOR TOWING AN AIRCRAFT WITH THE NOSE WHEEL LIFTED
PROCEDE ET DISPOSITIF DE REMORQUAGE D'AVIONS A ROUE AVANT D'ATTERRISSAGE SOULEVEE

(30) Priorität: 31.08.1989 DE 3928854
(43) Veröffentlichungstag der Anmeldung: 17.06.1992
(73) Patentinhaber: SCHOPF MASCHINENBAU GMBH, D-73760 Ostfildern (DE)
(72) Erfinder: PHILIPP, Klaus, D-7050 Waiblingen (DE)
(74) Vertreter: Wolf, Eckhard, Dr.-Ing.
(86) Internationale Anmeldenummer: EP9001102
(87) Internationale Veröffentlichungsnummer: WO9103399

(56) Entgegenhaltungen:
- US-A- 2 391 503
- US-A- 3 613 921

## Beschreibung

Die Erfindung betrifft ein Verfahren zum Schleppen eines Flugzeugs auf einer Rollbahn, bei dem das Flugzeug im Bereich seines Bugrades bzw. seiner Bugräder durch ein Schleppfahrzeug angehoben und anschließend mit angehobenem Bugrad geschoben oder gezogen wird. Die Erfindung betrifft weiter eine Vorrichtung zum Schleppen eines Flugzeugs auf einer Rollbahn mit einem Schleppfahrzeug, mit einer am Schleppfahrzeug angeordneten Hubvorrichtung zum Anheben des Flugzeugbugrades bzw. der Flugzeugbugräder, sowie mit einem mindestens eine Unterstützungsfläche für das angehobene Bugrad aufweisenden Traggeschirr.

Bei einem Verfahren zum Schleppen eines Flugzeugs mit angehobenem Bugrad ist es bekannt (DE-OS 38 01 855), das Bugrad des stehenden Flugzeugs von einem Schleppfahrzeug aus zu hintergreifen, auf eine Schaufel des Schleppfahrzeugs zu ziehen und die Schaufel mit dem daraufstehenden Bugrad anzuheben. Zum Heraufziehen des Bugrads auf die Schaufel weist das Schleppfahrzeug dort zwei schwenkbare Greifarme mit jeweils zwei an den Greifarmen drehbar gelagerten Rollen auf, die gegen die Lauffläche des Bugrads angepreßt werden und die Zugkraft auf das Bugrad übertragen. Durch das Anpressen der Rollen gegen die Lauffläche wird jedoch die Reifensohle im Bereich der Rollen auf einer relativ kleinen Fläche nach innen gebogen. Bei dieser untypischen Reifenbelastung besteht die Gefahr von inneren Reifenbrüchen, die zunächst unbemerkt bleiben und zum Platzen des Reifens führen können, wenn dieser z.B. beim Aufsetzen des Bugrads während der Landung stark belastet wird.

Zum Aufnehmen eines Flugzeugbugrads durch ein Schleppfahrzeug ist es weiter bekannt (US-PS 4 225 279), eine am Schleppfahrzeug angeordnete, zu einer Unterstützungsfläche für das Bugrad führende Rampe auf die Rollbahn abzusenken und durch Zurücksetzen des Schleppfahrzeugs unter das Bugrad des gebremsten Flugzeugs zu schieben. Jedoch führt auch dieses Verfahren zu reifenuntypischen Belastungen des Bugrades und birgt damit die Gefahr von Reifenschäden.

Ausgehend hiervon liegt der Erfindung die Aufgabe zugrunde, ein Verfahren und eine Vorrichtung zum Schleppen eines Flugzeugs mit angehobenem Bugrad zu entwickeln, womit sich das Bugrad ohne die Gefahr von Reifenschäden aufnehmen läßt.

Zur Lösung dieser Aufgabe werden erfindungsgemäß die im Kennzeichenteil der Ansprüche 1 und 12 angegebenen Merkmale vorgeschlagen. Weitere vorteilhafte Ausgestaltungen und Weiterbildungen der Erfindung ergeben sich aus den abhängigen Ansprüchen.

Die Erfindung geht von dem Gedanken aus, daß sich Reifenschäden am Bugrad beim Schleppen des Flugzeugs durch ausschließlich reifentypische Belastung des Bugrades vermeiden lassen. Dies läßt sich erfindungsgemäß dadurch erreichen, daß das Flugzeug durch Eigenantrieb mit seinem Bugrad auf ein getrennt vom Schleppfahrzeug auf der Rollbahn abgelegtes, eine Unterstützungsfläche für das Bugrad aufweisendes Traggeschirr gefahren wird und daß das Traggeschirr anschließend mit dem Schleppfahrzeug verbunden oder vom Schleppfahrzeug ergriffen und zusammen mit dem vom Traggeschirr unterstützten Bugrad angehoben wird.

Um das Schleppfahrzeug optimal auszulasten wird es zweckmäßig erst kurz vor Beginn des Schleppvorgangs an das auf der Unterstützungsfläche des Traggeschirrs stehende Bugrad herangefahren und mit dem Traggeschirr verbunden. Das anschließende Anheben des Traggeschirrs erfolgt vorteilhafterweise senkrecht, um eine Vorwärts- bzw. Rückwärtsbewegung des Flugzeugs zu vermeiden.

Um beim Schleppen des Flugzeugs Relativbewegungen zwi- schen Schleppfahrzeug und Flugzeug weitgehend auszuschalten, wird das Bugrad vorteilhafterweise vor dem Anheben des Traggeschirrs auf dem Traggeschirr oder nach dem Anheben des Traggeschirrs gegenüber dem Schleppfahrzeug unverschiebbar gesichert. Zweckmäßig wird auch das Traggeschirr selbst nach dem Anheben gegenüber dem Schleppfahrzeug unverschiebbar gesichert.

Gemäß einer vorteilhaften Ausgestaltung der Erfindung wird zum Absetzen des angehobenen Bugrads das Traggeschirr vom Schleppfahrzeug abgesenkt und auf die Rollbahn abgelegt. Nach dem Lösen und Wegfahren des Schleppfahrzeugs vom Traggeschirr kann das Flugzeug aus eigener Kraft ohne die Gefahr einer Kollision mit dem Schleppfahrzeug mit seinem Bugrad von der Unterstützungsfläche des Traggeschirrs heruntergefahren werden.

Eine andere vorteilhafte Weiterbildung der Erfindung sieht vor, daß zum Absetzen des angehobenen Bugrads das Traggeschirr mit seinem vom Schleppfahrzeug abgewandten Ende bis in die Nähe der Rollbahn oder auf die Rollbahn abgesenkt wird. Das Schleppfahrzeug kann dann zusammen mit dem Traggeschirr vom gebremsten Flugzeug weggefahren werden, wobei das ungebremste Bugrad von der Unterstützungsfläche des Traggeschirrs herabrollt.

Eine bevorzugte Vorrichtung zum Schleppen eines Flugzeugs auf einer Rollbahn sieht vor, daß das Traggeschirr lösbar mit der Hubvorrichtung des Schleppfahrzeugs verbindbar und getrennt vom Schleppfahrzeug auf der Rollbahn ablegbar und vom Bugrad befahrbar ist.

Vorteilhafterweise weist das Traggeschirr und/oder das Schleppfahrzeug Mittel zum Sichern des auf der Unterstützungsfläche stehenden Bugrads auf.

Um zu gewährleisten, daß das Flugzeugbugrad nach Beendigung des Schleppvorgangs in Auffahrrichtung von der Unterstützungsfläche des Traggeschirrs heruntergefahren werden kann, ist das vom Schleppfahrzeug getrennte Traggeschirr vom Bugrad überfahrbar ausgebildet.

Eine bevorzugte Ausgestaltung der Erfindung sieht vor, daß das Traggeschirr mindestens eine biegeelastische, mit ihrer Oberseite die Unterstützungsfläche bildende, das angehobene Bugrad an seiner Lauffläche teilweise umschlingende Platte, vorzugsweise aus hochfestem Bandstahl aufweist.

Gemäß einer anderen vorteilhaften Ausgestaltung der Erfindung weist das Traggeschirr mehrere miteinander verbundene, das angehobene Bugrad an seiner Lauffläche teilweise umschlingende Ketten oder Seile auf. Die Ketten oder Seile sind zweckmäßig quer zur Auffahrrichtung des Bugrads durch Platten oder Stege verbunden, die mit ihrer Oberseite die Unterstützungsfläche bilden. Die Platten oder Stege können biegeelastisch ausgebildet und in unbelastetem Zustand in ihrer Mitte konvex nach oben gebogen sein. Die Ketten können auch durch weitere Kettenglieder zu einem das angehobene Bugrad tragenden Kettengeflecht verbunden sein.

Eine weitere vorteilhafte Ausgestaltung der Erfindung sieht vor, daß das Traggeschirr mehrere in Auffahrrichtung hintereinander angeordnete, gelenkig miteinander verbundene, das angehobene Flugzeugbugrad an seiner Lauffläche teilweise umgreifende Platten oder Stege aufweist.

Gemäß einer weiteren bevorzugten Ausgestaltung der Erfindung ist am Traggeschirr eine biegesteife Platte vorgesehen, die in Auffahrrichtung ein wellenförmiges Längsprofil mit je einer von den Enden der Platte aus ansteigenden Auf- bzw. Abrollflanke und einer zwischen den Auf- und Abrollflanken angeordneten, mit ihrem Boden die Unterstützungsfläche bildenden Mulde aufweist. Bei entsprechender Ausbildung der an die Aufrollflanke anschließenden Innenflanke der Mulde kann die Platte ein Drehmoment um eine im wesentlichen vertikale Achse auf ein über die Innenflanke rollendes, im Winkel zur Plattenlängsachse ausgerichtetes Bugrad ausüben und dadurch das Bugrad selbsttätig parallel zur Plattenlängsachse ausrichten. Um ein Durchbiegen der belasteten Platte zu verhindern, weist die Platte auf ihrer Unterseite zweckmäßig Versteifungsstege auf.

Weitere vorteilhafte Ausgestaltungen der Erfindung sehen eine eben ausgebildete, in Auffahrrichtung einen Endanschlag für das Bugrad aufweisende oder eine in Auffahrrichtung nach unten konvex gekrümmte Platte vor, die in unbelastetem Zustand eine auf der Rollbahn aufliegende Auffahrkante für das Bugrad aufweist.

Um das Traggeschirr mit dem auf der Unterstützungsfläche stehenden Bugrad einfach und schnell mit der Hubvorrichtung des Schleppfahrzeugs zu verbinden, weist die Hubvorrichtung zweckmäßig mehrere an den Seiten oder Ecken des Traggeschirrs einhängbare Hubseile oder -ketten auf. Um die Bauhöhe des Schleppfahrzeugs zu begrenzen, sind die Hubseile oder Hubketten im Schleppfahrzeug vorteilhafterweise über Umlenkrollen zu ihren Anschlagpunkten am Traggeschirr geführt. Statt mit Hubseilen oder -ketten kann die Hubvorrichtung auch mit mechanischen Greifarmen versehen sein.

Im folgenden wird die Erfindung anhand mehrerer in der Zeichnung vereinfacht und in schematischer Weise dargestellter Ausführungsbeispiele näher erläutert. Es zeigen
- Fig. 1: eine Seitenansicht eines Schleppfahrzeugs mit einem als biegesteife Platte ausgebildeten Traggeschirr in teilweise geschnittener Darstellung;
- Fig. 2: eine Seitenansicht eines Schleppfahrzeugs mit einem als biegeelastische Platte ausgebildeten Traggeschirr in teilweise geschnittener Darstellung;
- Fig. 3: eine Ansicht des Traggeschirrs nach Fig. 1 in perspektivischer Darstellung;
- Fig. 4: eine Stirnseitenansicht eines auf der Rollbahn abgelegten, mit Mitteln zum Sichern der Bugräder versehenen Traggeschirrs;
- Fig. 5: eine Ansicht eines Traggeschirrs mit ebener Unterstützungsfläche in perspektivischer Darstellung;
- Fig. 6a und b: einen Längsschnitt durch ein Traggeschirr mit einer zur Rollbahn hin konvex gekrümmten Platte;
- Fig. 7a: eine Draufsicht auf ein Traggeschirr mit mehreren durch Stege verbundenen Ketten;
- Fig. 7b: einen Querschnitt durch das Traggeschirr nach Fig. 7a entlang der Linie A-A;
- Fig. 8: eine Draufsicht auf ein Traggeschirr mit mehreren gelenkig miteinander verbundenen Stegen.

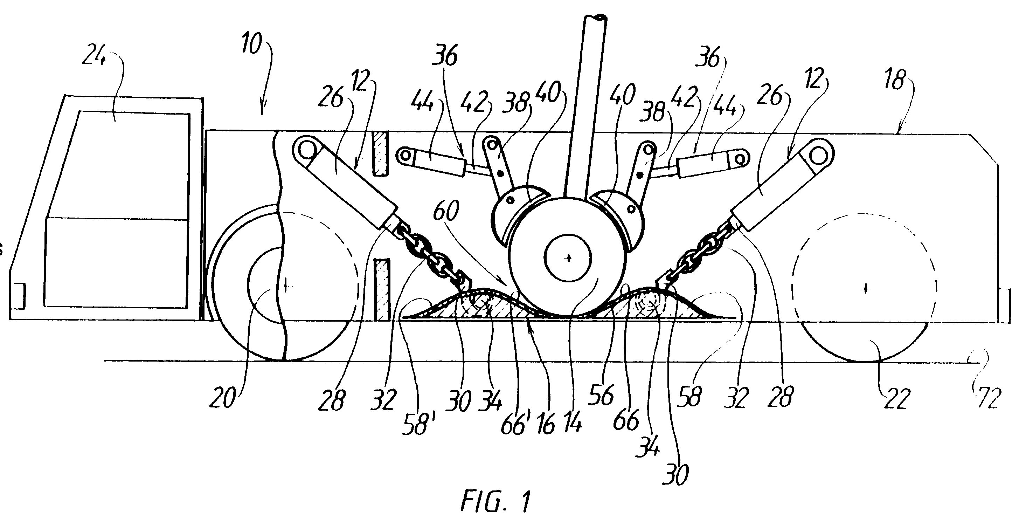

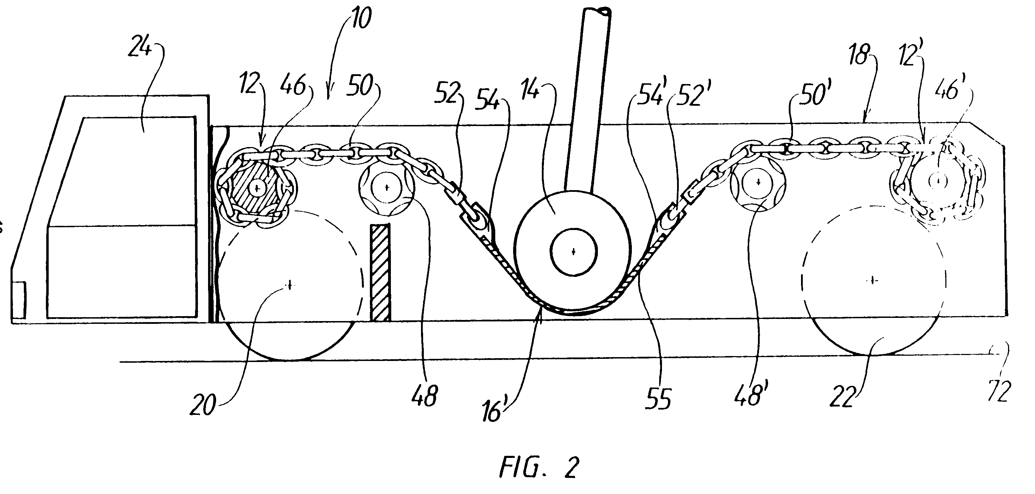

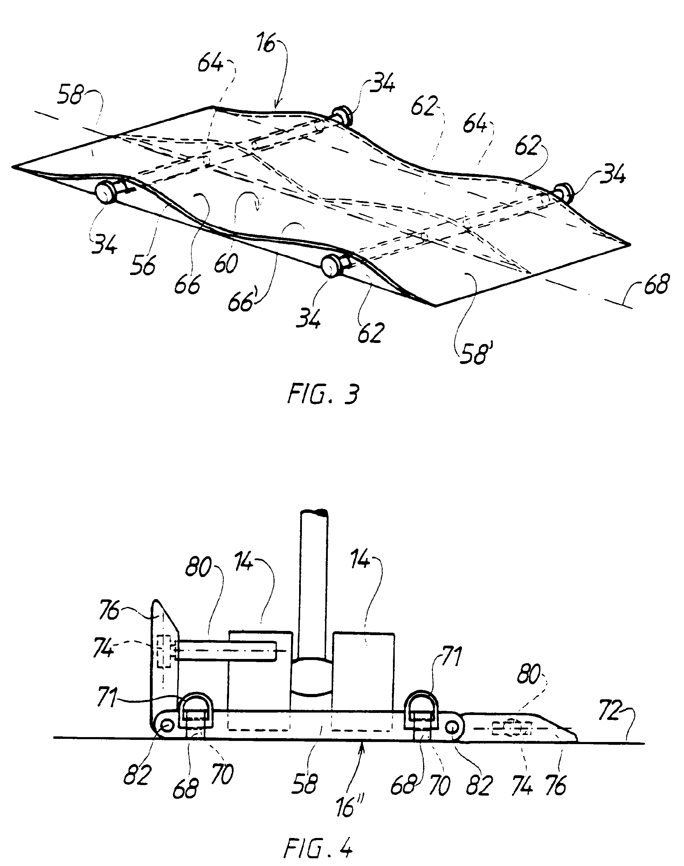

Die in den Fig. 1 und 2 dargestellte Vorrichtung dient zum Schleppen eines Flugzeugs mit angehobenen Bugrädern und besteht im wesentlichen aus einem Schleppfahrzeug 10, sowie einem die angehobenen Bugräder 14 tragenden, mit einer Hubvorrichtung 12,12' des Schleppfahrzeugs 10 verbundenen Traggeschirr 16,16'.

Das U-förmig ausgebildete, nach hinten offene Fahrgestell 18 des Schleppfahrzeugs 10 weist eine angetriebene lenkbare Vorderachse 20, zwei einzeln angetriebene lenkbare Hinterräder 22 sowie eine Fahrerkabine 24 auf. Die Hubvorrichtung 12,12' ist derart an den Seiten der U-förmigen Ausnehmung des Fahrgestells 18 angeordnet, daß sich das Schleppfahrzeug 10 so weit an die Bugräder 14 heranfahren läßt, bis diese sich innerhalb der Ausnehmung befinden.

Die Hubvorrichtung 12 des in Fig. 1 gezeigten Schleppfahrzeugs 10 weist jeweils zwei an beiden Seiten der Ausnehmung am Fahrgestell 18 schwenkbar angelenkte Hubzylinder 26 auf, mit deren Kolbenstangen 28 je eine an ihrem Ende mit einem Lasthaken 30 versehene Hubkette 32 verbunden ist. Die Lasthaken 30 greifen in Haltezapfen 34 ein, die über die Seiten des Traggeschirrs 16 überstehen.

Je zwei auf beiden Seiten der Ausnehmung angeordnete Haltevorrichtungen 36 mit einem am Fahrgestell angelenkten Schwenkarm 38, einer am freien Ende des Schwenkarms 38 angeordneten Anpreßplatte 40 und einem mit Druck beaufschlagbaren, mit seiner Kolbenstange 42 am Schwenkarm 38 angreifenden Schwenkzylinder 44 sichern die angehobenen Bugräder 14 während des Schleppvorgangs unverschiebbar gegenüber dem Schleppfahrzeug 10 und dem Traggeschirr 16. Der Krümmungsradius der am freien Ende der Schwenkarme 38 drehbar gelagerten Anpreßplatten 40 entspricht dem Radius der größten zu transportierenden Bugräder, so daß die an der Lauffläche der angehobenen Bugräder 14 anliegenden Anpreßplatten 40 während des Schleppvorgangs die Laufflächen nicht reifenuntypisch belasten. Im Hydraulikkreislauf der Schwenkzylinder 44 sind nicht dargestellte Ventile angeordnet, die bei Überschreiten eines vorgegebenen Maximaldrucks im Schwenkzylinder 44 geöffnet werden, wobei unter langsamem Einfahren der Kolbenstange 42 Hydraulikflüssigkeit von der Druckseite des Schwenkzylinders 44 über eine Drossel zum Hydrauliktank abfließt.

Die in Fig. 2 dargestellte Hubvorrichtung 12' besteht im wesentlichen aus drei Kettenwinden 46,46' mit insgesamt vier über Umlenkrollen 48,48' jeweils zu den Ecken des Traggeschirrs 16' geführten vereinfacht als Rundgliederketten dargestellten Hubketten 50,50'. Während die hinteren Kettentriebe 46' jeweils an der Seite der Fahrgestellausnehmung angeordnet und mit je einer Hubkette 50' versehen sind, weist der vordere, im Fahrgestell 18 gelagerte Kettentrieb 46 zwei parallel zueinander über die Umlenkrollen 48 an den Seiten der Ausnehmung geführte Hubketten 50 auf. An den Enden der Hubketten 50 sind Lasthaken 52,52' angeordnet, die in Anschlagösen 54,54' des Traggeschirrs 16' eingreifen.

Das von den Lasthaken 52,52' gehaltene Traggeschirr 16' (Fig. 2) besteht im wesentlichen aus einer an ihren Ecken mit Lastösen 54, 54' versehenen biegeelastischen Platte 55 aus dünnem hochfestem Bandstahl, die mit ihrer Oberseite den Bugrädern 14 als Unterstützungsfläche dient und die beim Anheben die Lauffläche der Bugräder 14 teilweise umschlingt.

Das in den Fig. 1 und 3 gezeigte Traggeschirr 16 weist eine wellenförmig gebogene biegesteife Platte 56 mit je einer von den Enden der Platte 56 aus ansteigenden Auf- bzw. Abrollflanke 58 bzw. 58' und eine zwischen den Auf- und Abrollflanken 58,58' angeordnete, mit ihrem Boden die Unterstützungsfläche bildende Mulde 60 auf. An der Unterseite der Platte 56 in Auffahrrichtung angeordnete Versteifungsstege 62 erhöhen die Biegesteifigkeit der Platte 56. Jeweils im Übergangsbereich zwischen der Auf- bzw. Abrollflanke 58,58' und der Mulde 60 werden die Versteifungsstege 62 quer zur Auffahrrichtung von einem beidseitig offenen Rohr 64 durchsetzt, in welches die Anschlagzapfen 34 zum Einhängen der Lasthaken 30 eingeschoben sind.

Die Länge und Steigung der an die Auf- bzw. Abrollflanken 58,58' anschließenden Innenflanken 66,66' der Mulde 60 sind derart gewählt, daß ein im Winkel zur Plattenlängsachse 68 ausgerichtetes, beim Auffahren über die Innenflanke 66 bzw. 66' rollendes Bugrad ein das Bugrad selbsttätig parallel zur Plattenlängsachse 68 ausrichtendes Drehmoment um eine im wesentlichen vertikale Achse erfährt.

Das ebenfalls mit einem wellenförmigen Längsprofil versehene Traggeschirr 16'' nach Fig. 4 weist anstelle der Anschlagzapfen 34 zwei an den Seitenrändern der Auf- bzw. Abrollflanke 58,58' angeformte, nach oben über die Platte 56 überstehende Stege 68 auf. Je eine Lastöse 71 zur Aufnahme von Lasthaken einer Hubvorrichtung ist in einem Durchbruch 70 der Stege 63 gehalten. Zwei vor dem Auffahren der Bugräder 14 auf der Rollbahn 72 aufliegende Seitenwangen 76 sind jeweils um Achsen 82 nach oben schwenkbar an den Längsseiten des Traggeschirrs 16'' angelenkt. Innerhalb der Seitenwangen 76 sind jeweils zwei Andrückrollen 80 an längsverschiebbaren Schwenklagern 74 angeordnet. Zum Sichern der auf der Platte 56 stehenden Bugräder 14 können die Andrückrollen 80 aus den nach oben geschwenkten Seitenwangen 76 herausgeschwenkt und anschließend die Schwenklager 74 in den Seitenwangen 76 längsverschoben werden, bis die Andrückrollen 80 an der Lauffläche der Bugräder 14 anliegen. Mit abgesenkten Seitenwangen 76 ist das Traggeschirr 16'' in allen Richtungen von den Bugrädern 14 überfahrbar.

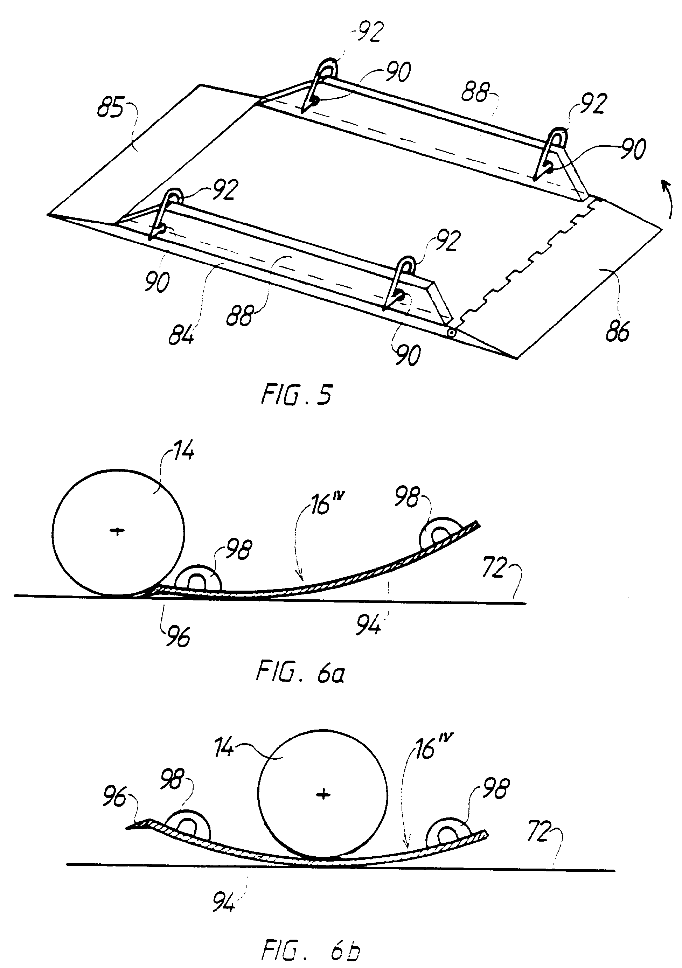

Das in Fig. 5 gezeigte Traggeschirr 16''' besteht im wesentlichen aus einer ebenen biegesteifen Platte 84, die an ihrem einen Ende mit einer Auffahrkante 85 und an ihrem der Auffahrkante gegenüberliegenden Ende mit einer den Bugrädern als Anschlag dienenden, nach oben klappbaren und in nach oben geklappter Stellung verriegelbaren Abfahrkante 86 versehen ist. Zwei im Bereich der Seitenkanten angeordnete, nach oben über die Platte 84 überstehende Seitenstege 88 versteifen die Platte 84. Vier in Durchbrüchen 90 der Seitenstege 88 gehaltene Lastösen 92 ermöglichen das Einhängen von Lasthaken einer am Schleppfahrzeug angeordneten Hubvorrichtung.

Die mit ihrer Oberseite den Bugrädern 14 als Unterstützungsfläche dienende biegesteife Platte 94 des in den Fig. 6 a und b dargestellten Traggeschirrs 16^{IV} weist ein zur Rollbahn 72 hin konvex gekrümmtes Längsprofil auf. Das Gewicht des Traggeschirrs 16^{IV} ist so verteilt, daß die unbelastete Platte 94 mit ihrer, dem Bugrad 14 zugewandten Auffahrkante 96 auf der Rollbahn 72 aufliegt und mit ihrer der Auffahrkante 9G gegenüberliegenden Kante nach oben über die Rollbahn übersteht (Fig. 6a). Durch die Gewichtskraft der auf dem Traggeschirr 16^{IV} stehenden Bugräder 14 wird die belastete Platte 94 unterhalb der Bugräder 14 gegen die Rollbahn gepreßt. Die beiden Enden der Platte 94 stehen nach oben über die Rollbahn 72 über (Fig. 6b) . Beim Schleppen des Flugzeugs werden die Bugräder 14 aufgrund der gekrümmten Form der an ihren Aufhängeösen 98 mit einer Hubvorrichtung des Schleppfahrzeugs verbundenen Platte 94 in der Mitte der Platte 94 gehalten.

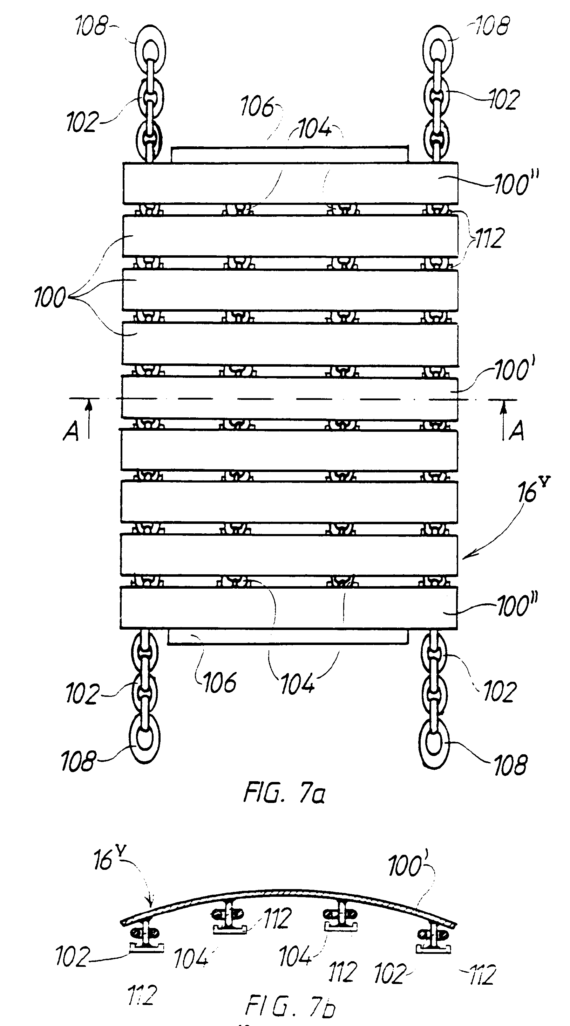

Das in den Fig. 7a und 7b dargestellte Traggeschirr 16^{V} weist vier durch plattenförmige Stege 100,100',100'' miteinander verbundene Ketten 102,104 auf. Die quer zur Auffahrrichtung der Bugräder ausgerichteten Stege 100, 100' sind biegeelastisch ausgebildet und in unbelastetem Zustand in ihrer Mitte konvex nach oben gebogen. Die Durchbiegung der Stege 100,100' nimmt ausgehend vom mittleren Steg 100' nach beiden Seiten zu kontinuierlich ab. Die an den Enden des Traggeschirrs 16^{V} angeordneten Stege 100'' sind eben ausgebildet und weisen eine auf der Rollbahn aufliegende Auffahrkante 106 auf. Jedes zweite Glied der Ketten 102,104 ist auf seiner nach oben weisenden Schmalseitenfläche mit einer der Platten 100,100',100'' verbunden und weist auf seiner unteren Schmalseitenfläche eine auf der Rollbahn 72 aufliegende Unterstützungskufe 110 zur Verminderung der Flächenpressung zwischen Kette und Rollbahn auf. Die Enden der beiden seitlich am Traggeschirr angeordneten Ketten 102 ragen in Längsrichtung über die jeweils letzten Stege 100'' hinaus und sind an ihren Enden mit einem Lastring 108 zum Einhängen eines mit einer Hubvorrichtung verbundenen Lasthakens versehen. Nach dem Auffahren der Bugräder auf das Traggeschirr 16^{V} werden die unter den Bugrädern angeordneten Stege 100, 100' durch die Gewichtskraft der Bugräder in ihrer Mitte nach unten gedrückt und bilden eine horizontale Unterstützungsfläche für die Bugräder. Beim Anheben des Traggeschirrs 16^{V} legt sich ein Teil der Platten 100 des in der Mitte durchhängenden Traggeschirrs gegen die Lauffläche der Bugräder an. Die Bugräder werden damit vom Traggeschirr unverschiebbar gegenüber dem Schleppfahrzeug gehalten.

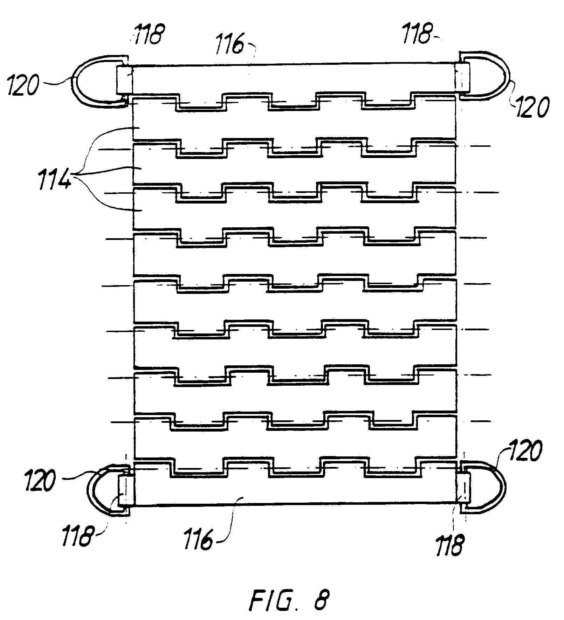

Das in Fig. 8 dargestellte Traggeschirr 16^{VI} weist eine Vielzahl von in Auffahrrichtung hintereinander angeordneten, gelenkig miteinander verbundenen Stegen 114 auf. Die jeweils endseitigen Stege sind als Auf- bzw. Abfahrkante 116 ausgebildet und zur Rollbahn hin angeschrägt. Vier an den Ecken des Traggeschirrs 16^{VI} in Halterungen 118 schwenkbar gehaltene Lastösen 120 dienen zum Einhängen von Lasthaken einer Hubvorrichtung.

Das Traggeschirr wird auf der Rollbahn abgelegt, und mit seiner Auffahrkante bzw. Auffahrflanke in Richtung der heranrollenden Flugzeugbugräder ausgerichtet. Das Ablegen und Ausrichten kann bei leichteren Traggeschirren von Hand, bei schwereren Traggeschirren mit Hilfe des Schleppfahrzeugs oder durch ein Hilfsfahrzeug, beispielsweise einen Gabelstapler erfolgen.

Ein mit Eigenantrieb heranrollendes Flugzeug wird sodann so eingewiesen, daß es in seiner Parkposition mit den Bugrädern auf der Unterstützungsfläche des Traggeschirrs zum Stehen kommt. Bei entsprechender Ausbildung des Traggeschirrs können die Bugräder anschließend unverschiebbar auf dem Traggeschirr gesichert werden.

Nach Abfertigung des Flugzeugs und vor Beginn des Schleppvorgangs wird das Schleppfahrzeug an das Traggeschirr herangefahren und mit dem Traggeschirr verbunden. Dazu wird das Schleppfahrzeug so weit an das Traggeschirr angenähert, bis sich dieses innerhalb der Ausnehmung des Schleppfahrzeugs befindet. Die mit den Hubketten der Hubvorrichtung verbundenen Lasthaken werden in die Zapfen, Lastösen oder Ringe des Traggeschirrs eingehängt. Durch Betätigung der Hubvorrichtung wird anschließend das Traggeschirr mit den auf der Unterstützungsfläche stehenden Bugrädern kippungsfrei senkrecht angehoben.

Bei entsprechender Ausbildung des Schleppfahrzeugs können die Bugräder nach dem Anheben des Traggeschirrs mit der Haltevorrichtung unverschiebbar gegenüber dem Schleppfahrzeug gesichert werden.

Das Absetzen der angehobenen Bugräder kann auf unterschiedliche Weise erfolgen: In einem Fall wird das Traggeschirr gleichmäßig abgesenkt bis es vollständig auf der Rollbahn aufliegt. Sodann wird die Verbindung zwischen Hubvorrichtung und Traggeschirr gelöst, das Schleppfahrzeug weggefahren und anschließend das Flugzeug durch Eigenantrieb in Auffahrrichtung mit seinen Bugrädern von der Unterstützungsfläche des Traggeschirrs heruntergefahren. Alternativ dazu kann bei stehendem Schleppfahrzeug das Traggeschirr an seinem hinteren, vom Schleppfahrzeug abgewandten Ende bis in die Nähe der Rollbahn oder auf die Rollbahn abgesenkt und danach das Schleppfahrzeug zusammen mit dem Traggeschirr unter den Bugrädern des gebremsten Flugzeugs nach vorne weggefahren werden, wobei die ungebremsten Bugräder von der Unterstützungsfläche des Traggeschirrs herunterrollen.

## Patentansprüche

1. Verfahren zum Schleppen eines Flugzeugs auf einer Rollbahn, bei dem das Flugzeug im Bereich seines Bugrades bzw. seiner Bugräder durch ein Schleppfahrzeug angehoben und anschließend mit angehobenem Bugrad geschoben oder gezogen wird, **dadurch** **gekennzeichnet**, daß das Flugzeug durch Eigenantrieb mit seinem Bugrad auf ein getrennt vom Schleppfahrzeug auf der Rollbahn abgelegtes, eine Unterstützungsfläche für das Bugrad aufweisendes Traggeschirr gefahren wird und daß das Traggeschirr anschließend mit dem Schleppfahrzeug verbunden oder vom Schleppfahrzeug ergriffen und zusammen mit dem vom Traggeschirr unterstützten Bugrad angehoben wird.

2. Verfahren nach Anspruch 1, **dadurch gekennzeichnet,** daß das Schleppfahrzeug an das auf der Unterstützungsfläche des Traggeschirrs stehende Bugrad herangefahren und anschließend mit dem Traggeschirr verbunden wird.

3. Verfahren nach einem der Ansprüche 1 oder 2, **da****durch gekennzeichnet,** daß das Traggeschirr mit dem auf der Unterstützungsfläche stehenden Bugrad senkrecht angehoben wird.

4. Verfahren nach einem der Ansprüche 1 bis 3, **da****durch gekennzeichnet,** daß das Bugrad vor dem Anheben des Traggeschirrs unverschiebbar auf dem Traggeschirr gesichert wird.

5. Verfahren nach einem der Ansprüche 1 bis 4, da**durch gekennzeichnet,** daß das Bugrad nach dem Anheben des Traggeschirrs gegenüber dem Schleppfahrzeug unverschiebbar gesichert wird.

6. Verfahren nach einem der Ansprüche 1 bis 5, da**durch gekennzeichnet,** daß das Traggeschirr nach dem Anheben gegenüber dem Schleppfahrzeug unverschiebbar gesichert wird.

7. Verfahren nach einem der Ansprüche 1 bis 6, **da****durch gekennzeichnet,** daß zum Absetzen des angehobenen Bugrads das Traggeschirr vom Schleppfahrzeug abgesenkt und auf die Rollbahn abgelegt wird.

8. Verfahren nach Anspruch 7, **dadurch gekennzeichnet,** daß das Schleppfahrzeug von dem auf der Rollbahn abgelegten Traggeschirr gelöst und weggefahren wird.

9. Verfahren nach Anspruch 8, **dadurch gekennzeichnet,** daß das Flugzeug durch Eigenantrieb mit seinem Bugrad von der Unterstützungsfläche des Traggeschirrs heruntergefahren wird.

10. Verfahren nach einem der Ansprüche 1 bis 6, **da****durch gekennzeichnet,** daß zum Absetzen des angehobenen Bugrads das Traggeschirr mit seinem vom Schleppfahrzeug abgewandten Ende bis in die Nähe der Rollbahn oder auf die Rollbahn abgesenkt wird.

11. Verfahren nach Anspruch 10, **dadurch gekennzeich****net,** daß nach dem einseitigen Absenken des Traggeschirrs das Flugzeug gebremst und das Schleppfahrzeug zusammen mit dem Traggeschirr unter Herabrollen des ungebremsten Bugrads von der Unterstützungsfläche vom Flugzeug weggefahren wird.

12. Vorrichtung zum Schleppen eines Flugzeugs auf einer Rollbahn mit einem Schleppfahrzeug, mit einer am Schleppfahrzeug angeordneten Hubvorrichtung zum Anheben des Flugzeugbugrades bzw. der Flugzeugbugräder, sowie mit einem mindestens eine Unterstützungsfläche für das angehobene Bugrad aufweisendes Traggeschirr, **dadurch gekennzeichnet,** daß das Traggeschirr (16,16' ,16'' ,16''' ,16^{IV} ,16^{V} ,16^{VI}) lösbar mit der Hubvorrichtung (12,12') des Schleppfahrzeugs (10) verbindbar und getrennt vom Schleppfahrzeug (10) auf der Rollbahn (72) ablegbar und vom Bugrad (14) befahrbar ist.

13. Vorrichtung nach Anspruch 12, **dadurch gekennzeich****net**, daß das Traggeschirr (16,16',16'',16''',16^{IV}, 16^{V},16^{IV}) und/oder das Schleppfahrzeug (10) Mittel (80, 36) zum Sichern des auf der Unterstützungsfläche stehenden Bugrads (14) aufweist.

14. Vorrichtung nach Anspruch 12 oder 13, **dadurch ge****kennzeichnet,** daß das vom Schleppfahrzeug getrennte Traggeschirr (16,16' ,16'',16''',16^{IV},16^{V}) vom Bugrad (14) überfahrbar ist.

15. Vorrichtung nach einem der Ansprüche 12 bis 14, **dadurch gekennzeichnet,** daß das Traggeschirr (16') mindestens eine biegeelastische, mit ihrer Oberseite die Unterstützungsfläche bildende, das angehobene Bugrad (14) an seiner Lauffläche teilweise umschlingende Platte (55), vorzugsweise aus hochfestem Bandstahl aufweist.

16. Vorrichtung nach einem der Ansprüche 12 bis 14, **dadurch gekennzeichnet,** daß das Traggeschirr (16^{V}) mehrere miteinander verbundene, das angehobene Bugrad (14) an seiner Lauffläche teilweise umschlingende Ketten (102,104) oder Seile aufweist.

17. Vorrichtung nach Anspruch 16, **dadurch gekennzeich****net**, daß die Ketten (102,104) oder Seile quer zur Auffahrrichtung des Bugrads durch Platten oder Stege (100,100',100'') verbunden sind, die mit ihrer Oberseite die Unterstützungsfläche bilden.

18. Vorrichtung nach Anspruch 17, **dadurch gekennzeich****net,** daß die Platten oder Stege (100,100') biegeelastisch ausgebildet und in unbelastetem Zustand in ihrer Mitte konvex nach oben gebogen sind.

19. Vorrichtung nach Anspruch 16, **dadurch gekennzeich****net,** daß die Ketten durch weitere Kettenglieder zu einem Kettengeflecht verbunden sind.

20. Vorrichtung nach einem der Ansprüche 12 bis 14, **dadurch gekennzeichnet,** daß das Traggeschirr (16^{VI}) mehrere in Auffahrrichtung hintereinander angeordnete, gelenkig miteinander verbundene, das angehobene Flugzeugbugrad an seiner Lauffläche teilweise umgreifende Platten (112) oder Stege aufweist

21. Vorrichtung nach einem der Ansprüche 12 bis 14, **dadurch gekennzeichnet,** daß das Traggeschirr (16, 16'',16^{IV}) eine mit ihrer Oberseite die Unterstützungsfläche bildende biegesteife Platte (56,84,94) aufweist.

22. Vorrichtung nach Anspruch 21, **dadurch gekennzeich****net,** daß die Platte (56) in Auffahrrichtung ein wellenförmiges Längsprofil mit je einer von den Enden des Traggeschirrs (16) aus ansteigenden Auf- bzw. Abrollflanke (58,58') und einer zwischen den Auf- und Abrollflanken (58,58') angeordneten, mit ihrem Boden die Unterstützungsfläche bildenden Mulde (60) aufweist.

23. Vorrichtung nach Anspruch 22, **dadurch gekennzeich****net,** daß die Platte (56) auf ihrer Unterseite Versteifungsstege (62) aufweist.

24. Vorrichtung nach Anspruch 21, **dadurch gekennzeichnet**, daß die Platte (84) eben ausgebildet ist und in Auffahrrichtung einen vorzugsweise abklappbaren Endanschlag (86) für das Bugrad (14) aufweist.

25. Vorrichtung nach Anspruch 21, **dadurch gekennzeich****net,** daß die Platte (94) in Auffahrrichtung ein nach unten konvex gekrümmtes Längsprofil aufweist.

26. Vorrichtung nach Anspruch 25, **dadurch gekennzeich****net,** daß die unbelastete Platte (94) eine auf der Rollbahn (72) aufliegende Auffahrkante (96) für das Bugrad (14) aufweist.

27. Vorrichtung nach einem der Ansprüche 12 bis 26, **dadurch gekennzeichnet**, daß die Hubvorrichtung (12,12') mehrere mit den Seiten oder Ecken des Traggeschirrs (16,16' ,16'',16''',16^{IV},16^{V}) verbindbare Hubseile oder Hubketten (32,50,50') aufweist.

28. Vorrichtung nach Anspruch 27, **dadurch gekennzeich****net,** daß die Hubseile oder Hubketten (50,50') im Schleppfahrzeug (10) über Umlenkrollen (48,48') zu den Seiten oder Ecken des mit dem Schleppfahrzeug (10) verbundenen Traggeschirrs (16,16',16'',16''', 16^{IV},16^{V}) geführt sind.

29. Vorrichtung nach einem der Ansprüche 12 bis 28, **dadurch gekennzeichnet,** daß die Hubvorrichtung (12) mehrere am Schleppfahrzeug (10) angelenkte mit den Seiten oder Ecken des Traggeschirrs (16, 16',16'',16''',16^{IV},16^{V}) verbindbare Hubzylinder (26) aufweist.

## Claims

1. A process for towing an aircraft on a taxiway, in which the aircraft is lifted in the region of its nose wheel or wheels by a towing vehicle and subsequently pushed or pulled with the nose wheel lifted, **characterized in that** the aircraft is driven automotively with its nose wheel on to a carrying harness, which has been put down separately from the towing vehicle on the taxiway and has a support surface for the nose wheel, and that the carrying harness is subsequently coupled to the towing vehicle or gripped by the towing vehicle and is lifted together with the nose wheel supported by the carrying harness.

2. The process according to claim 1, **characterized in tha****t** the towing vehicle is driven up to the nose wheel standing on the support surface of the carrying harness and is subsequently coupled to the carrying harness.

3. The process according to one of the claims 1 or 2, **characterized in that** the carrying harness is lifted perpendicularly together with the nose wheel standing on the support surface.

4. The process according to one of the claims 1 through 3, **characterized in that** the nose wheel is immovably secured on the carrying harness before the carrying harness is lifted.

5. The process according to one of the claims 1 through 4, **characterized in that** the nose wheel is immovably secured with respect to the towing vehicle after the carrying harness is lifted.

6. The process according to one of the claims 1 through 5, **characterized in that** after the lifting operation, the carrying harness is immovably secured with respect to the towing vehicle.

7. The process according to one of the claims 1 through 6, **characterized in that** to set down the lifted nose wheel, the carrying harness is lowered by the towing vehicle and put down on the taxiway.

8. The process according to claim 7, **characterized in that** the towing vehicle is released and driven away from the carrying harness which is set down on the taxiway.

9. The process according to claim 8, **characterized in that** the aircraft, together with its nose wheels, is driven down automotively from the support surface of the carrying harness.

10. The process according to one of the claims 1 through 6, **characterized in that** to set down the lifted nose wheel, the carrying harness is lowered with its end, which is turned away from the towing vehicle, until it is in the vicinity of the taxiway or on the taxiway.

11. The process according to claim 10, **characterized in that** after the one-sided lowering of the carrying harness, the aircraft is braked, and the towing vehicle, together with the carrying harness, is driven away from the aircraft while the unbraked nose wheel rolls down from the support surface.

12. A device for towing an aircraft on a taxiway with a towing vehicle, with a lifting device mounted on the towing vehicle for lifting the aircraft nose wheel or wheels, as well as with a carrying harness having at least one support surface for the lifted nose wheel, **characterized in that** the carrying harness (16,16',16'',16''',16^{IV},16^{V},16^{VI}) is able to be detachably coupled to the lifting device (12,12') of the towing vehicle (10), put down on the taxiway (72) separately from the towing vehicle (10), and driven on by the nose wheel (14).

13. The device according to claim 12, **characterized in th****at** the carrying harness (16,16',16'',16''',16^{IV},16^{V},16^{VI}) and/or the towing vehicle (10) exhibit means (80, 36) for securing the nose wheel (14) standing on the support surface.

14. The device according to claim 12 or 13, **characterized in that** the carrying harness (16,16',16'',16''',16^{IV},16^{V}), which is separated from the towing vehicle, is able to be driven over by the nose wheel (14).

15. The device according to one of the claims 12 through 14, **characterized in that** the carrying harness (16') has at least one flexible plate (55), preferably of high-tensile steel strip, which forms the support surface with its top side and partially winds around the rolling surface of the lifted nose wheel (14).

16. The device according to one of the claims 12 through 14, **characterized in that** the carrying harness (16^{V}) has several interconnected chains (102,104) or cables, which partly wind around the rolling surface of the lifted nose wheel (14).

17. The device according to claim 16, **characterized in that** the chains (102,104) or cables are connected at right angles to the drive-on direction of the nose wheel by plates or fixed links (100,100',100''), which form the support surface with their top side.

18. The device according to claim 17, **characterized in that** the plates or fixed links (100,100') have a flexible design and, in the non-loaded state, are bent convexly upwards in their middle.

19. The device according to claim 16, **characterized in that** the chains are connected by other chain links to form a chain mesh.

20. The device according to one of the claims 12 through 14, **characterized in that** the carrying harness (16^{VI}) has several plates (112) or fixed links which are arranged one behind the other in the drive-on direction, connected with articulation to one another, and partially encircle the rolling surface of the lifted aircraft nose wheel.

21. The device according to one of the claims 12 through 14, **characterized in that** the carrying harness (16,16'',16^{IV}) has a flexurally stiff plate (56,84,94) forming a support surface with its top side.

22. The device according to claim 21, **characterized in that** the plate (56) has an undulated longitudinal profile in the drive-on direction with one roll-on or roll-off slope (58,58'), each rising from the ends of the carrying harness (16), and with one depression (60), which is arranged between the roll-on and roll-off slopes (58,58') and whose base forms the support surface.

23. The device according to claim 22, **characterized in that** the plate (56) has reinforcing crosspieces (62) on its bottom side.

24. The device according to claim 21, **characterized in that** the plate (84) has a flat design and, in the drive-on direction, exhibits a limit stop (86), preferably able to be folded up, for the nose wheel (14).

25. The device according to claim 21, **characterized in that** the plate (94) has a longitudinal profile which is curved convexly downwards in the drive-on direction.

26. The device according to claim 25, **characterized in that** the nonloaded plate (94) exhibits a drive-on edge (96) resting on the taxiway (72) for the nose wheel (14).

27. The device according to one of the claims 12 through 26, **characterized in that** the lifting device (12,12') has several lifting cables or chains (32,50,50'), which are able to be connected to the sides or corners of the carrying harness (16,16',16'',16''',16^{IV}, 16^{V}).

28. The device according to claim 27, **characterized in that** the lifting cables or lifting chains (50,50') in the towing vehicle (10) are run over deflection pulleys (48,48') to the sides or corners of the carrying harness (16,16',16'',16''',16^{IV}, 16^{V}) connected to the towing vehicle (10).

29. The device according to one of the claims 12 through 28, **characterized in that** the lifting device (12) has several lifting cylinders (26) hinged on the towing vehicle (10) and capable of being connected to the sides or corners of the carrying harness (16,16',16'',16''',16^{IV}, 16^{V}).

## Revendications

1. Procédé pour le remorquage d'un avion sur une piste de roulement par lequel l'avion est soulevé dans la région de sa roue avant et respectivement de ses roues avant par un remorqueur, puis poussé ou tracté avec la roue avant soulevée, **caractérisé en ce** que l'avion est amené avec sa roue avant par sa propre force motrice sur un harnais de support déposé séparément du remorqueur sur la piste de roulement et comportant une surface d'appui pour la roue avant, et que le harnais de support est ensuite accouplé au remorqueur ou saisi par le remorqueur, puis soulevé avec la roue avant soutenue par le harnais de support.

2. Procédé selon la revendication 1, caractérisé en ce que le remorqueur est rapproché de la roue avant placée sur la surface d'appui du harnais de support accouplé audit harnais de support.

3. Procédé selon l'une des revendications 1 ou 2, caractérisé en ce que le harnais de support avec la roue avant placée sur la surface d'appui est relevé verticalement.

4. Procédé selon l'une des revendications 1 à 3, caractérisé en ce que la roue avant est immobilisée sur le harnais de support avant le relevage dudit harnais de support.

5. Procédé selon l'une des revendications 1 à 4, caractérisé en ce que la roue avant est immobilisée par rapport au remorqueur avant le relevage du harnais de support.

6. Procédé selon l'une des revendications 1 à 5, caractérisé en ce que le harnais de support est immobilisé par rapport au remorqueur après le relevage.

7. Procédé selon l'une des revendications 1 à 6, caractérisé en ce que, pour la dépose de la roue avant soulevée, le harnais de support est abaissé par le remorqueur et déposé sur la piste de roulement.

8. Procédé selon la revendication 7, caractérisé en ce que le remorqueur est détaché et éloigné du harnais de support déposé sur la piste de roulement.

9. Procédé selon la revendication 8, caractérisé en ce que l'avion peut faire descendre sa roue avant de la surface d'appui du harnais de support par ses propres moyens.

10. Procédé selon l'une des revendications 1 à 6, caractérisé en ce que, pour déposer la roue avant soulevée, l'extrémité du harnais de support opposée au remorqueur est abaissée jusqu'à proximité de la piste de roulement ou sur la piste de roulement.

11. Procédé selon la revendication 10, caractérisé en ce que, après l'abaissement unilatéral du harnais de support, l'avion est freiné et que le remorqueur, conjointement avec le harnais de support, est éloigné de l'avion, la roue avant non freinée descendant de la surface d'appui dudit harnais de support.

12. Dispositif pour le remorquage d'un avion sur une piste de roulement, comprenant un remorqueur, un dispositif de levage monté sur le remorqueur et destiné à soulever la roue avant ou les roues avant de l'avion, ainsi qu'un harnais de support comportant au moins une surface d'appui pour la roue avant soulevée, **caractérisé en ce** que le harnais de support (16, 16', 16'', 16''', 16^{IV}, 16^{V}, 16^{VI}) peut être couplé de manière amovible avec le dispositif de levage (12, 12') du remorqueur (10) et déposé, séparé du remorqueur (10), sur la piste de roulement (72) et que la roue avant (14) peut rouler sur ledit harnais de support.

13. Dispositif selon la revendication 12, caractérisé en ce que le harnais de support (16, 16', 16'', 16''', 16^{IV}, 16^{V}, 16^{VI}) et/ou le remorqueur (10) présentent des moyens (80, 36) pour bloquer la roue avant (14) placée sur la surface d'appui.

14. Dispositif selon l'une des revendications 12 ou 13, caractérisé en ce que le harnais de support (16, 16', 16'', 16''', 16^{IV}, 16^{V},) séparé du remorqueur peut être franchi par la roue avant (14).

15. Dispositif selon l'une des revendications 12 à 14, caractérisé en ce que le harnais de support (16') comprend au moins une plaque (55) flexible, de préférence réalisée dans un acier feuillard à haute résistance, dont la face supérieure constitue la surface d'appui qui enveloppe partiellement la surface de roulement de la roue avant (14) soulevée.

16. Dispositif selon l'une des revendications 12 à 14, caractérisé en ce que le harnais de support(16^{V}) comporte plusieurs chaînes (102, 104) ou câbles reliés entre eux et enveloppant partiellement la roue avant (14) soulevée sur sa surface de roulement.

17. Dispositif selon la revendication 16, caractérisé en ce que les chaînes (102, 104) ou câbles sont reliés transversalement à la direction d'accès de la roue avant, par des plaques ou barrettes (100, 100', 100'') qui forment avec leur face supérieure la surface d'appui.

18. Dispositif selon la revendication 17, caractérisé en ce que les plaques ou barrettes (100, 100') sont flexibles et présentent au milieu, à l'état non chargé, une courbure convexe dirigée vers le haut.

19. Dispositif selon la revendication 16, caractérisé en ce que les chaînes sont reliées par des maillons supplémentaires de façon à former un treillis de chaînes.

20. Dispositif selon l'une des revendications 12 à 14, caractérisé en ce que le harnais (16^{VI}) comprend une pluralité de plaques (112) ou barrettes disposées les unes derrière les autres dans la direction d'accès et articulées entre elles, qui enveloppent partiellement la roue avant soulevée sur sa surface de roulement.

21. Dispositif selon l'une des revendications 12 à 14, caractérisé en ce que le harnais de support (16, 16'', 16^{IV}) comprend une plaque (56, 84, 94) rigide en flexion qui forme avec sa face supérieure la surface d'appui.

22. Dispositif selon la revendication 21, caractérisé en ce que la plaque (56) présente dans la direction d'accès un profil longitudinal ondulé avec respectivement un flanc de montée ou de descente (58, 58') qui monte à partir des extrémités du harnais de support (16), et un creux (60) disposé entre les flancs de montée et de descente (58, 58') et formant avec son fond la surface d'appui.

23. Dispositif selon la revendication 22, caractérisé en ce que la plaque (56) est munie sur sa face inférieure de nervures raidisseuses (62).

24. Dispositif selon la revendication 21, caractérisé en ce que la plaque (84) est plane et présente, dans la direction d'accès, une butée terminale (86), de préférence rabattable, pour la roue avant (14).

25. Dispositif selon la revendication 21, caractérisé en ce que la plaque (94) présente, dans la direction d'accès, un profil longitudinal avec une courbure convexe dirigée vers le bas.

26. Dispositif selon la revendication 25, caractérisé en ce que, à l'état non chargé, la plaque (94) comporte un rebord d'accès (96) pour la roue avant (14) lequel repose sur la piste de roulement (72).

27. Dispositif selon l'une des revendications 12 à 26, caractérisé en ce que le dispositif de levage (12, 12') comprend une pluralité de câbles ou de chaînes de levage (32, 50, 50') lesquels peuvent être accrochés sur les côtés ou dans les coins du harnais de support (16, 16', 16'', 16''', 16^{IV}, 16^{V}).

28. Dispositif selon la revendication 27, caractérisé en ce que, dans le remorqueur (10), les câbles ou chaînes de levage (50, 50') sont amenés vers les côtés ou coins du harnais de support (16, 16', 16'', 16''', 16^{IV}, 16^{V}) couplé avec ledit remorqueur (10) en passant sur des poulies de renvoi (48, 48').

29. Dispositif selon l'une des revendications 12 à 28, caractérisé en ce que le dispositif de levage (12) comprend une pluralité de cylindres de levage (26) articulés sur le remorqueur (10), qui peuvent être couplés avec les côtés ou coins du harnais de support (16, 16', 16'', 16''', 16^{IV}, 16^{V}).
